(19) **Europäisches Patentamt / European Patent Office / Office européen des brevets**

(11) **EP 1 961 003 B1**

(12) **EUROPEAN PATENT SPECIFICATION**

(45) Date of publication and mention
of the grant of the patent:
**10.02.2010 Bulletin 2010/06**

(21) Application number: **06831994.6**

(22) Date of filing: **29.11.2006**

(51) Int Cl.:
$G11B\ 7/135$ (2006.01)     $G11B\ 7/09$ (2006.01)

(86) International application number:
**PCT/IB2006/054499**

(87) International publication number:
**WO 2007/066258 (14.06.2007 Gazette 2007/24)**

(54) **AIR GAP SERVO FOR OPTICAL RECORDING**

LUFTSPALT-SERVO FÜR OPTISCHE AUFZEICHNUNG

ASSERVISSEMENT DE HAUTEUR DE SURVOL POUR ENREGISTREMENT OPTIQUE

(84) Designated Contracting States:
**AT BE BG CH CY CZ DE DK EE ES FI FR GB GR HU IE IS IT LI LT LU LV MC NL PL PT RO SE SI SK TR**

(30) Priority: **06.12.2005 EP 05301013**

(43) Date of publication of application:
**27.08.2008 Bulletin 2008/35**

(73) Proprietor: **Koninklijke Philips Electronics N.V.**
**5621 BA Eindhoven (NL)**

(72) Inventor: **LEE, Juil**
**NL-5656 AA Eindhoven (NL)**

(74) Representative: **Uittenbogaard, Frank**
**Philips**
**Intellectual Property & Standards**
**P.O. Box 220**
**5600 AE Eindhoven (NL)**

(56) References cited:
**EP-A1- 1 422 702      WO-A-2005/101391**
**WO-A-2005/104115     US-A1- 2005 180 283**
**US-B1- 6 404 710**

- KIMIHIRO K ET AL: "Readout Method for Read Only Memory Signal and Air Gap Control Signal in a Near Field Optical Disc System" JAPANESE JOURNAL OF APPLIED PHYSICS, JAPAN SOCIETY OF APPLIED PHYSICS, TOKYO, JP, vol. 41, March 2002 (2002-03), pages 1898-1902, XP002358566 ISSN: 0021-4922 cited in the application
- ISHIMOTO T ET AL: "Gap servo system for a blaxial device using an optical gap signal in a near field readout system" OPTICAL MEMORY AND OPTICAL DATA STORAGE TOPICAL MEETING, 2002. INTERNATIONAL SYMPOSIUM ON 7-11 JULY 2002, PISCATAWAY, NJ, USA,IEEE, 7 July 2002 (2002-07-07), pages 287-289, XP010600201 ISBN: 0-7803-7379-0 cited in the application

**Description**

**Field of the invention**

The invention relates to a device for near field optical recording, information being represented by marks in a track on a record carrier, the device comprising a head including a lens to be positioned by a lens actuator at a near field distance from a surface of the record carrier for generating a scanning spot on the track, and an air gap controller for controlling an air gap between the lens and the surface, which air gap controller has an approach mode for bringing the lens from a remote distance to the near field distance by providing an increasing periodical excitation signal to the lens actuator for generating a sequence of approach instants at which the lens approaches the surface, the lens at the approach instants having substantially zero velocity in a direction perpendicular to the surface, and the sequence of approach instants bringing the lens subsequently closer to the surface.

The invention further relates to a pull-in method for bringing a lens from a remote distance to a near field distance from a surface of a record carrier for use in near field optical recording, the method comprising providing an increasing periodical excitation to a lens actuator for generating a sequence of approach instants at which the lens approaches the surface, the lens at the approach instants having substantially zero velocity in a direction perpendicular to the surface, and the sequence of approach instants bringing the lens subsequently closer to the surface.

**Background of the invention**

An air gap servo for near-field optical recording is known from the document "Gap Servo System for a Biaxial Device Using an Optical Gap Signal in a Near Field Readout System," by T. Ishimoto, K. Saito, T. Kondo, A. Nakaoki and M. Yamamoto, published at ISOM/ODS 2002 (further referred to as doc[1]). Doc[1] describes a readout method using a near field optical head and an optical record carrier, which head consists of an aspherical lens and a Solid Immersion lens (SIL). In the system it is necessary to maintain an air gap between the SIL bottom surface and the disc surface constantly in a near field position where an evanescent wave is detectable. An air gap error signal is generated to detect the distance between the SIL and the disc surface. However, the air gap error signal is only available in a near field region of approximately 50 nm.

WO2005/101391 describes an air gap servo system that controls a head actuator system to maintain the required position of the head. A specific starting servo system is proposed for bringing the head near the surface from a remote starting position, a so-called pull-in procedure. The pull-in procedure is completed by a switch over to the air gap servo loop when the lens moves into a near field position. During the pull-in procedure overshoot may pose a severe problem, eventually resulting in a head-disc crash if the head comes into contact with the disc surface. The described starting servo system provides a periodic excitation signal to the lens actuator in order to have instants at which the lens approaches the surface, the lens at the approach instants having substantially zero velocity in a direction perpendicular to the surface, and the sequence of approach instants bringing the lens subsequently closer to the surface. When, at such an instant, the head arrives within the near-field distance, a switch is made to the closed loop mode, in which the lens is maintained at the required near-field distance by a closed servo loop.

However in practice, the known system, when in the approach mode, does not operate safely for practical record carriers.

**Summary of the invention**

Therefore it is an object of the invention to provide an air gap servo system and pull-in method for optical recording that is fast and has a low risk for a head-disc crash.

According to a first aspect of the invention the object is achieved with a device as defined in the opening paragraph, which device comprises control means for controlling a rotation of the record carrier, characterized in that the control means are arranged for detecting a disc displacement of the surface of record carrier in the direction of the head, and in that the the air gap controller is arranged for synchronizing the periodical excitation to the rotation of the record carrier such that one of said approach instants having substantially zero velocity in a direction perpendicular to the surface corresponds to a minimum of the disc surface displacement.

According to a second aspect of the invention the object is achieved with a method as defined in the opening paragraph which pull-in method comprises controlling a rotation of the record carrier, detecting a disc displacement of the surface of record carrier in the direction of the head, and synchronizing the periodical excitation to the rotation of the record carrier such that one of said approach instants having substantially zero velocity in a direction perpendicular to the surface corresponds to a minimum of the disc surface displacement.

In practice, record carriers are not completely flat. The effect of the measures is that a displacement of the surface of the record carrier is detected, and in particular the minimum value of the displacement is detected. As the record carrier is rotated, said minimum correlates to a rotational instant due to said non-flatness. Synchronizing is applied to the periodical excitation for matching the timing of said rotational instant to a specific approach instant, such that the distance between the lens and the surface then has its minimum. Advantageously, at the specific approach instant, the velocity of the lens is substantially zero, but also the displacement of the surface has a zero velocity. Hence smooth switching to the closed mode is achieved.

The invention is also based on the following recognition. The inventors have seen that a problem of a non-flat disc, with the prior air gap servo, might be that the periodic excitation maxima do occur randomly with respect to variations in the disc displacement. As a consequence, the minimum distance might occur at a different instant than the approach instant, i.e. when the speed of the lens differs from zero. Hence overshoot or even a head crash might occur when switching to a closed loop at such instant. According to the invention, the timing of the maxima in the displacement of the surface has been synchronized to the maxima of the periodic excitation. Hence, safe operation for practical record carriers is achieved by further reducing risk of a head crash.

In an embodiment of the device the control means comprises position means for detecting a rotational position of the record carrier, and a memory for storing the peak rotational position which corresponds to said minimum of the disc displacement. The detecting of the minimum is coupled to detecting the rotational position. Advantageously, due to the memory, said position is easily synchronized to the periodic excitation.

In an embodiment of the device the control means are arranged for said detecting a disc displacement of the surface of record carrier in the direction of the head by a processing servo signal from a focus servo system for focusing a beam on a layer of the record carrier. The focus servo system is available in devices for optical recording to generate the scanning spot on a recording layer of the record carrier. The focus servo system generates the focus servo signal, e.g. an actuator signal or focus error signal. The inventors have seen that the available focus servo system can provide information of said disc displacement, even when not actually focused on the intended high-density layer in near-field mode. For example the focus servo system may just be used as a detector in open loop mode, or the beam may be temporarily focused on a different layer. In a particular embodiment the focus servo system is arranged for focusing a beam of radiation of a wavelength different from the wavelength of the scanning spot. The device is provided with an additional optical system for a different wavelength, e.g. for backward compatibility with existing recording formats like DVD or CD. The additional optical system may be used to detect the disc displacement, e.g. by focusing the beam of said different wavelength on said high-density layer, or on a lower-density layer present in the record carrier. Advantageously, with only minor modifications, the existing focus servo system is used to detect the disc displacements by processing the focus servo signal.

Further preferred embodiments of the device and method according to the invention are given in the appended claims, disclosure of which is incorporated herein by reference.

## Brief description of the drawings

These and other aspects of the invention will be apparent from and elucidated further with reference to the embodiments described by way of example in the following description and with reference to the accompanying drawings, in which

Fig. 1 shows an optical recording device having an air gap servo,
Fig.2 shows a schematic diagram of elements in a head for near field optical recording,
Fig.3 shows calculated reflection curves of the gap error signal,
Fig.4 shows an approach method on a flat record carrier,
Fig.5 shows an air gap between a lens and a disc,
Fig.6 shows a swinging pull-in procedure without synchronization,
Fig.7 shows a synchronous sine generator, and an air gap between a lens and a disc,
Fig.8 shows a synchronized excitation signal,
Fig.9A shows a slightly increasing amplitude periodical signal superposed on a ramp,
Fig.9B shows a strongly increasing amplitude sinusoidal signal superposed on a ramp, and
Fig.9C shows a low-pass filtered staircase signal.
In the Figures, elements which correspond to elements already described have the same reference numerals.

## Description of the preferred embodiments

An optical recording system using a near field optical head, which consists of an aspherical lens and a Solid Immersion Lens (SIL), has been proposed as a technology to read out 150 Gbyte or more on a 12 cm optical disc. In this system, it is essential to maintain an air gap between the SIL bottom surface and the disc constantly in a near field position where the evanescent wave is detectable. Thereto an air gap servo system is required

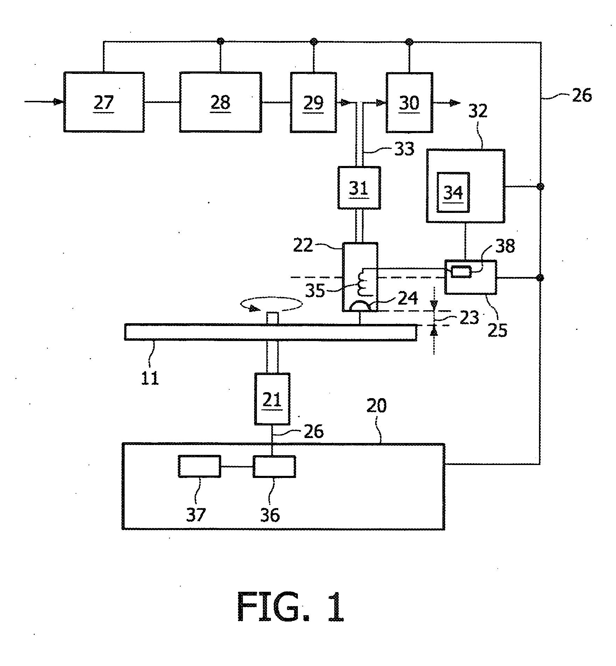

Fig.1 shows an optical recording device having an air gap servo. The device is for optically reading and/or recording data on a record carrier 11 via a near field optical system. The near field optical system is known as such, *inter alia* from doc[1] and from K. Saito, et. al, "Readout Method for Read Only Memory Signal and Air Gap Control Signal in a Near Field Optical Disc System," Jpn. J. Appl. Phys., Vol.41 (2002), pp.1898-1902 (further referred to as doc [2]). The disc-shaped record carrier 11 has a track arranged as a spiral or annular pattern of turns constituting substantially parallel tracks on an information layer. The track on a recordable type of record carrier may be indicated by a pre-embossed track structure provided during manufacture of the blank record carrier, for example a pregroove. A track structure may also be formed by regularly spread marks which periodically cause servo signals to occur. Recorded information is represented on the information layer by optically detectable marks recorded along the track. The marks are constituted by variations of a physical parameter and thereby have different optical properties than their surroundings, e.g. variations in reflection obtained when recording in materials such as dye, alloy or phase change material, or variations in direction of polarization obtained when recording in magneto-optical material. The record carrier may be intended to carry real-time information, for example video or audio information, or other information, such as computer data.

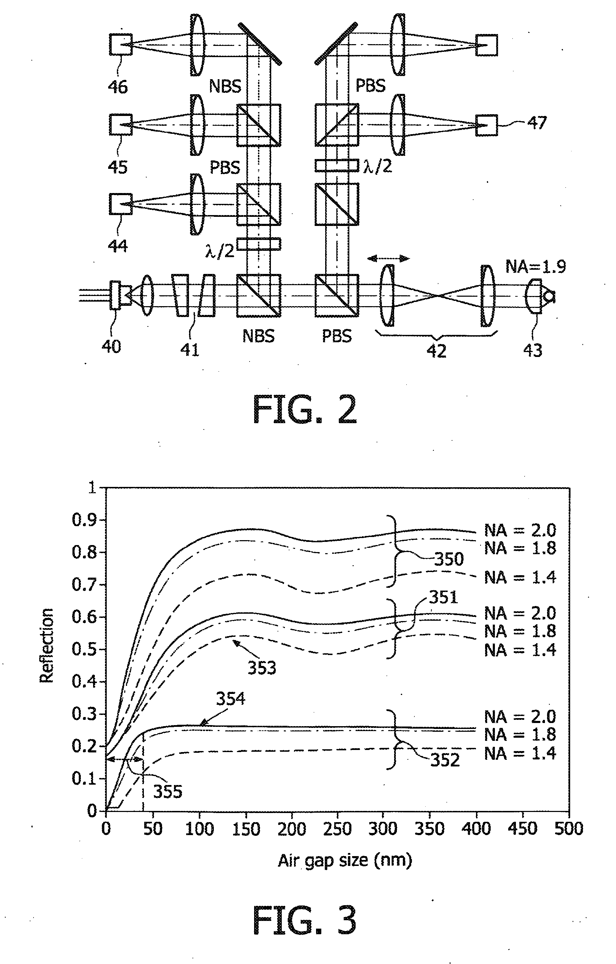

The device is provided with means for scanning a track on the record carrier 11, which means include a drive unit 21 for rotating the record carrier 11, a head 22, a servo unit 25 for positioning the head 22 on the track and a control unit 20. The head 22 comprises an optical system of a known type for generating a radiation beam guided through optical elements focused to a radiation spot on a track of the information layer of the record carrier. The radiation beam is generated by a radiation source, e.g. a laser diode. The servo unit 25 has a focus servo system 38 for focusing the radiation beam to a scanning spot on a recording layer of the record carrier. The head comprises a lens 24, and a lens actuator 35 coupled to an air gap servo controller 32 for positioning the lens at a near field distance 23 from the surface of the record carrier 11. A detailed example of optical elements in the head is shown in Fig.2. The air gap controller has an approach mode for bringing the lens from a remote distance to the near field distance by providing an increasing periodical excitation signal to the lens actuator for generating a sequence of approach instants at which the lens approaches the surface. At the approach instants the lens has substantially zero velocity in a direction perpendicular to the surface of the record carrier. The sequence of approach instants brings the lens subsequently closer to the surface. Finally, when the lens is within the near field distance at one of the approach instants, the air gap controller switches to a closed loop mode. Switching from the open loop approach mode to the closed loop mode may be performed in a hand-over mode, during which reference trajectories for position, and/or speed and acceleration of the lens are generated.

When the optical head moves into a near field position and the gap error signal is available, the air gap servo system may be switched into the closed-loop control operation via a hand-over control. The gap reference for the gap servo loop is not set directly to its final target value, but may be generated by a reference generator to provide a smooth trajectory from an initial reference to the final target air gap distance, as further discussed in WO2005/101391.

The head further comprises (not shown) a tracking actuator for fine positioning of the spot in a radial direction on the center of the track. The tracking actuator may comprise coils and permanent magnets for radially moving an optical element or may alternatively be arranged for changing the angle of a reflecting element. For reading the radiation reflected by the information layer is detected by a detector of a usual type, e.g. a four-quadrant diode, in the head 22 for generating detector signals, including a main scanning signal 33 and sub-detector signals for tracking and focusing. A front-end unit 31 is coupled to the head 22 for receiving the detector signals based on radiation reflected from the track. The main scanning signal 33 is processed by read processing unit 30 of a usual type including a demodulator, deformatter and output unit to retrieve the information.

The control unit 20 controls the recording and retrieving of information and may be arranged for receiving commands from a user or from a host computer. The control unit 20 is connected via control lines 26, e.g. a system bus, to the other units in the device. The control unit 20 comprises control circuitry, for example a microprocessor, a program memory and interfaces for performing the procedures and functions as described below. The control unit 20 may also be implemented as a state machine in logic circuits.

The device may be provided with recording means for recording information on record carriers of a writable or re-writable type. The recording means cooperate with the head 22 and front-end unit 31 for generating a write beam of radiation, and comprise write processing means for processing the input information to generate a write signal to drive the head 22, which write processing means comprise an input unit 27, a formatter 28 and a modulator 29. For writing information the power of the beam of radiation is controlled by modulator 29 to create optically detectable marks in the recording layer.

In an embodiment the input unit 27 comprises compression means for input signals such as analog audio and/or video, or digital uncompressed audio/video. Suitable compression means are described for video in the MPEG standards, MPEG-1 is defined in ISO/IEC 11172 and MPEG-2 is defined in ISO/IEC 13818. The input signal may alternatively be already encoded according to such standards.

The control unit 20 is arranged for controlling a rotation of the record carrier, and detecting a disc displacement of the surface of record carrier in the direction of the head, also called run-out of the record carrier. The run-out is detected as a function of the rotational position of the record carrier, i.e. the run-out values constitute a repetitive pattern at the rotational frequency of the record carrier. The displacement of the surface may be detected by a separate sensor, or by using focusing signals from the focus servo system when the focus servo is locked. In the locked status the focusing signals, e.g. the focus actuator signal, represent the displacement of the disc surface. Detecting a minimum value of the displacement may be performed in the control unit 20, e.g. by acquiring signal values from the servo system via the bus 26.

The rotational position of the record carrier is detected by a rotation control system 36 in control unit 20, which monitors the actual rotational position. For example the rotational position may be based on tacho control signals to the rotation drive motor or from detecting signals from the record carrier, such as detecting a marker by a sensor or reading recorded information from an optical head. It is noted that the device may use the head described above, or may have an additional head or sensor, for reading any suitable information to detect the rotational position of the record carrier, e.g, data from a different layer or from a prerecorded pattern.

The disc displacement may be detected from any focus servo system that is available to generate a scanning spot on a recording layer of the record carrier. The focus servo system normally generates the focus servo signal, e.g. an actuator signal or focus error signal. The available focus servo system can provide information of said disc displacement, even when not actually focused on the intended high-density layer in near-field mode. For example the focus servo system may just be used as a detector in open loop mode, or the beam may be temporarily focused on a different layer.

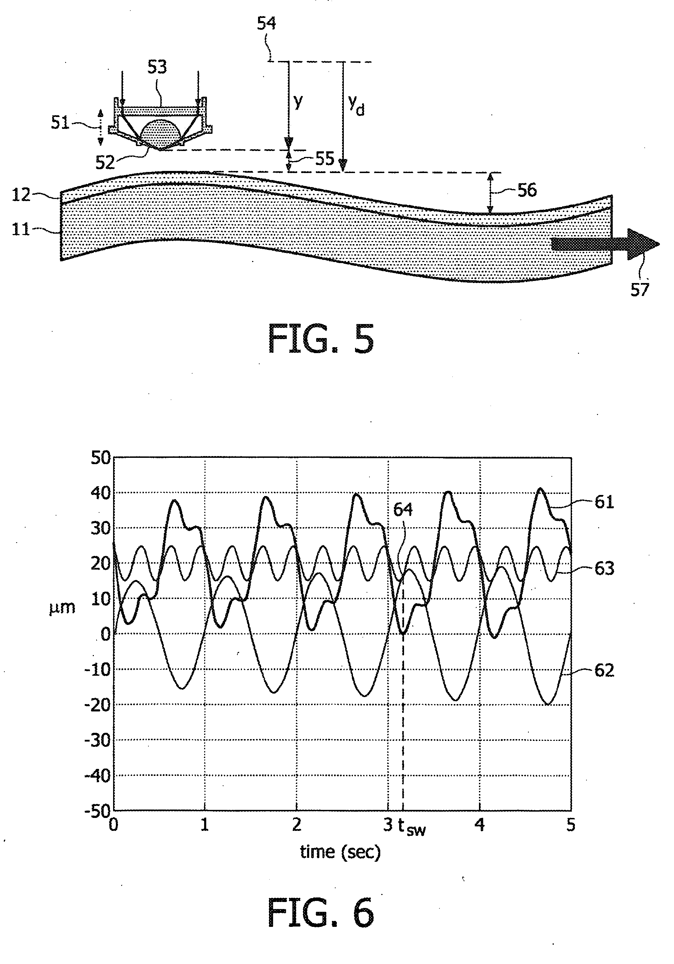

The air gap controller 32 is arranged for synchronizing the periodical excitation to the rotation of the record carrier such that one of said approach instants having substantially zero velocity in a direction perpendicular to the surface corresponds to a minimum of the disc displacement. The synchronizing function of the air gap controller and the control unit 20 is further elucidated below with reference to Figures 5 to 8. In an embodiment the air gap controller 32 includes a synchronous sine generator 34. The synchronous sine generator has a sync input for receiving a rotation control signal indicative of the rotation, and has an output for generating a synchronous sine wave for generating the periodical excitation.

In an embodiment the rotation control system 36 is coupled to a memory 37. The memory 37 may be used for storing a specific rotational position which corresponds to said minimum of the disc displacement. The memory may also be used to accommodate a memory loop control system, in which loop servo signals are stored and retrieved in synchronization with the rotation of the record carrier. The disc displacement data of a full revolution of the record carrier may be stored in the memory, and may be used as a feed-forward signal in a focus control servo system. For example a course focus servo actuator may be controlled based on the data stored in the memory. From the memory 37 one or more minima of the disc displacement may be detected and used for synchronizing the periodic excitation signal.

In an embodiment, the device is provided with an additional optical system for scanning a different type of record carrier, e.g. an optical light path for backward compatibility with existing recording formats like DVD or CD. The additional optical system is used to detect the disc displacement as follows. The additional optical system is focused on a layer of the record carrier, and a servo signal is generated that corresponds to the disc run-out, e.g. a servo actuator signal of an objective lens in a far-field optical head. The existing focus servo system is used to detect the disc displacements by processing focus servo signals from the available focus servo systems. The additional optical system may be focusing the beam of said different wavelength on the high-density layer, or on a lower-density layer additionally present in the record carrier. It is noted that the scanning spot, generated by the additional optical system may be deformed due to the differences of the different type of record carrier, and the actual near-field record carrier. However, this is not relevant for detecting the disc displacement, as it is not required to scan any marks or retrieve information from the tracks.

Fig.2 shows a schematic diagram of elements in a head for near field optical recording. The schematic diagram provides an example of a near-field optical player setup used for readout experiments. In the experimental player a conventional DVD actuator is used for air gap control and tracking in which a special near field lens is mounted having a numerical aperture NA = 1.9. In the Figure PBS = Polarizing beam-splitter; NBS = Non-polarizing beam-splitter; and $\lambda/2$ = half-wave plate. The set-up consists of a main branch comprising a blue-violet laser 40 and collimator lens, beam shaping optics 41, two beam-splitters and a telescope 42 for focus adjustment of the NA = 1.9 lens 43. The left side branch in the Figure contains a photodiode 44 for detection of the RF central aperture signal that contains the data information and is polarized parallel to the main beam. In the same branch a split detector 45 is positioned to generate a push-pull tracking error signal. Moreover, for the experimental set-up only, a CCD camera 46 is included to observe the irradiance pattern at the exit pupil. A half-wave plate $\lambda/2$ is used to control the amount of light that the PBS splits and directs towards the RF detector and the push pull detector, respectively.

The second branch on the right side of the Figure is used to generate the error signal for air gap control. In near field optical disk systems, the SIL lens 43 needs to be positioned within the evanescent decay distance from the disk. In our set-up the SIL to disk distance is typically 25 nm. To allow air gap control with a mechanical actuator at such small distances, a suitable error signal is required. As described in doc[1] and doc[2], a linear signal that is suitable as a gap error signal (GES) can be obtained from the reflected light with a polarization state perpendicular to that of the main beam that is focused on the disk. A significant fraction of the light becomes elliptically polarized after reflection at the SIL-air-disk interfaces: this effect creates the well-known Maltese cross when the reflected light is observed through a polarizer. By integrating all the light of this Maltese cross using polarizing optics and a single photodetector 47, a perpendicular polarization state signal (called "RF ⊥ pol") is obtained, and a gap error signal GES is generated from the "RF ⊥ pol" signal.

Fig.3 shows calculated reflection curves of the gap error signal. The Figure is based on simulated GES curves on Si disc with no grooves, and indicates reflection against air gap size. A first curve 350 shows the total reflection, a second curve 351 shows reflection for the parallel polarization, and a third curve 352 shows reflection for the perpendicular polarization as a function of the air gap width, each curve showing the result for three NA values. The second curve 351 may be used as HF signal 353 for data read-out. The amount of the perpendicular polarization state of light reflected at the bottom of the SIL is applied as a gap error signal 354 (GES) to control the air gap. As shown in the Figure, however, the gap error signal is available only in a GES linear range 355 within a near field regime of approximately 50 nm.

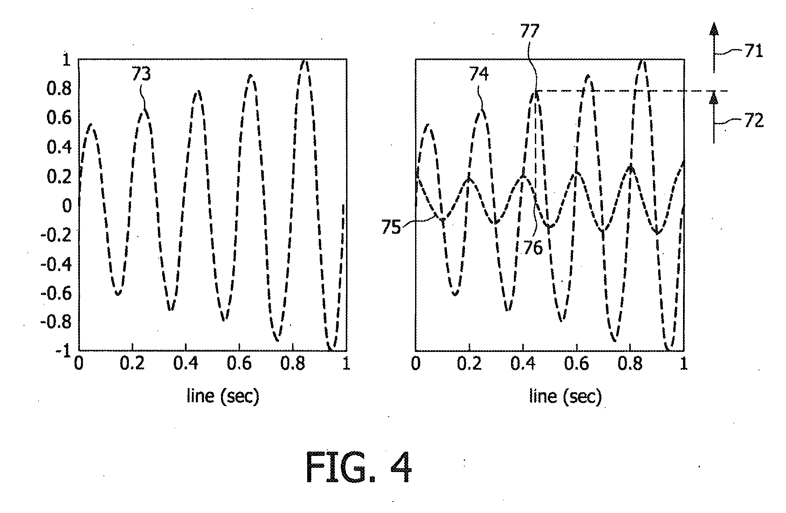

Therefore, a so-called pull-in procedure is required. By the pull-in procedure, the optical head approaches the near-field regime from its initial far-field position through an open-loop operation, and then the air gap servo system is switched into a closed-operation as smooth as possible to avoid any collision of the optical head with the disc. The air gap servo system proposed consists of three control modes that are switched from one to another depending on the operating condition. First, the approach control is to move the optical head from its initial far-field position into the near-field regime where the linear GES is detected; the hand-over control is to achieve a smooth and fast transient response during the switching from the open-loop approach control into the final closed-loop air gap regulating control; and finally the air-gap control is to maintain the air-gap around a fixed target air gap. In the pull-in procedure in WO2005/1013 a sinusoidal voltage with its amplitude increasing over time is applied to the actuator during the approach mode as is shown in Fig.4, which will be called to as 'swinging pull-in' from now on. The air gap servo system starts its closed-loop operation at one of the sinusoidal peaks and the velocity of the optical head is kept close to zero at the switching instant. This enables us to reduce the overshoot significantly at the transient from the open-loop to the closed-loop operation, and hence the lens-disc collision can be effectively avoided.

Fig.4 shows an approach method on a flat record carrier. The left graph shows an applied increasing periodical signal 73 as normalized current versus time, and the right graph shows a normalized position 74 and velocity 75 during approaching from a far-field range 72 to a near-field range 71. This leads to a sequence of approach instants such as first approach instant 77 where the near-field region is just entered for the first time, and a periodic approaching velocity 75 having about zero speed at the approach instants. In particular the velocity is substantially zero at said first approach instant 77 as indicated by arrow 76, at which switching the air gap servo system to the closed-loop operation may be performed. Hence, as is shown in the Figure, at some point in time t = $t_n$, the positive peak position of the optical head starts to enter the near-field regime. Therefore, if the mode switching, from the open-loop approach control into the closed-loop or hand-over control, occurs at t = $t_n$, the velocity of the optical head is kept zero at the switching instant. Thereby, on a flat record carrier, the overshoot is significantly reduced in the transient responses at the switching moment even with relatively low sampling frequency.

The effect of the pull-in method in the air gap servo is that the amplitude-increasing sinusoidal signal is applied to the actuator when the optical head approaches the near-field regime from its far-field regime. As explained now for a non-flat record carrier having a run-out, the periodical excitation is synchronized to the run-out.

In practice, it is highly preferable to start the air gap servo system on a rotating disc, e.g. during startup, or when the air gap servo system executes a (temporary) safety pull-back of lens. This may occur due to a temporary shock or vibration, local defects on the disc, etc during drive operation. Hence the air gap servo needs to start again preferably without stopping the disc in order to interrupt the drive operation as short as possible.

For a rotating disc situation, the swinging pull-in procedure described in WO2005/101391 does not guarantee a small overshoot at the switching instant from open-loop to closed-loop operation. In the known system, a positive sinusoidal peak of the optical head displacement in Fig.4 does not correspond to a minimum air gap distance between the disc and the SIL, which, in turn, does not guarantee a close-to zero velocity of the optical head at the switching instance.

Fig.5 shows an air gap between a lens and a disc. A record carrier 11, having a recording layer 12, is shown in detail. This record carrier is exemplary for practical record carriers which are not completely flat. An actuator 51 is positioned above the record carrier 11, which is rotating as indicated by arrow 57. The actuator 51 is part of an optical head, which has further optical elements like a further lens 53 and active elements like a detector and/or laser (not shown). The actuator 51 is for moving a lens 52 to a near-field distance powered by an actuator control signal, e.g. provided by the air gap controller 32 as shown in Fig.1.

During the rotation the disc surface moves in a direction perpendicular to the surface as indicated by arrow 56, causing disc displacement also called axial run-out, for example 40 μm. Note that in practice the required air gap may be orders of magnitude smaller than the axial run-out, e.g. 20 nm. The run-out has a minimum at the position of the lens 52, and a maximum at the position of arrow 56. At the position of the lens 52 an air gap 55 is present, which may be defined as the difference between the position of the lens y and the disc displacement $y_d$ with respect to a reference level 54, for example the position of the optical head.

Fig.6 shows a swinging pull-in procedure without synchronization. The Figure shows a graph having axial run-out at the vertical axis and time at the horizontal axis. The run-out is assumed to have a single maximum and a single minimum in a sinusoidal pattern during one rotation of the record carrier. A first curve 63 represents the position of the lens y, which is moved by the periodic excitation signal as explained above. A second curve 62 represents the disc displacement $y_d$ and a third curve 61 represents the resulting air gap ($y_d$ - y). No synchronization has been applied. For a rotating disc, such a swinging pull-in procedure does not guarantee a close-to zero velocity of the optical head at the switching instance $t_{sw}$, as indicated by arrow 64.

The Figures 5 and 6 show an example in which the disc is rotating at 3 Hz while the optical head is swinging at 1 Hz with a certain initial phase offset with respect to the disc rotation. In this particular example, the lens 52 has a significant velocity when it enters the near field region where the GES is available, and hence at the switching instance $t_{sw}$ a large overshoot might occur leading to a lens-disc crash.

For adapting the swinging pull-in procedure to effectively accommodate a rotating disc, a positive sinusoidal peak of the optical lens displacement is synchronized to correspond to the minimum air gap distance between the disc surface and the lens 52. Thereto a sinusoidal excitation voltage generation block may be arranged as follows.

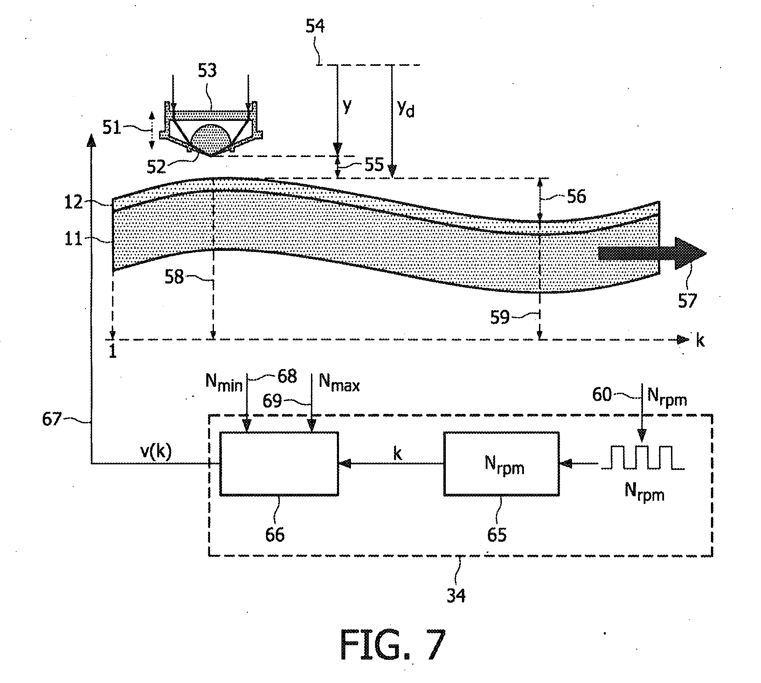

Fig.7 shows a synchronous sine generator, and an air gap between a lens and a disc. The synchronous sine generator 34 has a sync input 60 for receiving a rotation control signal $N_{rpm}$ indicative of the rotation. The synchronous sine generator 34 has a counter unit 65 coupled to a generator unit 66 which has an output 67 for generating a synchronous sine wave for generating the actuator control signal v(k) for the periodical excitation of the lens 52. The counter unit 65 processes the rotation control signal $N_{rpm}$, for example a sequence of tacho pulses from a tacho generator, to generate a synchronization signal k indicative of the rotational position of the record carrier. The generator unit 66 has further inputs to receive disc displacement information, in particular the position 58 of the minimum disc displacement $N_{min}$ as indicated by arrow 68 and the position 59 of the maximum disc displacement $N_{max}$ as indicated by arrow 69. The minimum and maximum disc displacements are defined with respect to the rotational position, e.g. based on the synchronization signal k.

By the circuit 34 as shown in Fig.7 the sinusoidal excitation voltage is synchronized to the disc rotation. This is achieved by making use of, for instance, tacho pulses from the spindle motor driving circuitry. The phase of the sinusoidal excitation voltage is initially set such that the positive sinusoidal peak of the optical head displacement corresponds to the minimum of the disc displacement $y_d$ in Fig.7, which can be detected, for instance, from a disc skew correction procedure during drive start-up calibration or from a memory-loop servo controller during drive operation.

As shown in Fig.7, the spindle motor driving circuitry provides $N_{rpm}$ tacho pulses per one disc revolution, and the disc displacement $y_d$ has its minimum and maximum at tacho pulse number $N_{min}$ and $N_{max}$, respectively. Then, the excitation voltage v(k) can be given as:

$$\mathrm{v}(k) = \left( v_0 + \frac{\Delta v}{N_{rpm}} k \right) \cdot \sin\left( \frac{2\pi}{N_{rpm}} (k - N_{min}) + \frac{\pi}{2} \right), \; k = 1, \cdots, N_{rpm}$$

where k is the tacho pulse number ranging from 1 until $N_{rpm}$ in this case, and $v_0$, $\Delta v$ are the initial voltage and voltage increment in each revolution, respectively.

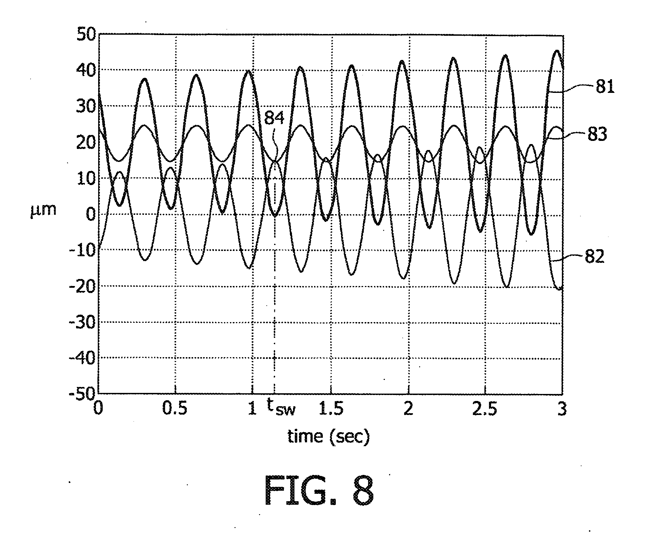

Fig.8 shows a synchronized excitation signal. The Fig.shows a graph having axial run-out at the vertical axis and time at the horizontal axis, like Fig.6. A first curve 83 represents the position of the lens y, which is moved by the periodic excitation signal synchronized as explained above. A second curve 82 represents the disc displacement $y_d$ and a third curve 81 represents the resulting air gap ($y_d$ - y). Note that synchronization has been applied, and that a sinusoidal air gap is generated due to the equal frequency selected in the simulation for the periodic excitation signal and the disc displacement from rotation. For a rotating disc, the novel swinging pull-in procedure does guarantee a close-to zero velocity of the optical head at the switching instance $t_{sw}$ from open-loop to closed-loop operation, as indicated by arrow 84. Hence the novel air gap servo can be utilized on a rotating disc. The main idea is to guarantee that the optical head maximum displacement is increasing in synchronization with a disc rotation, and further it corresponds to the minimum air gap distance between a SIL and a disc.

The swinging pull-in procedure provides an increasing periodic signal, e.g. an increasing amplitude sinusoidal signal as shown the Figures 6 and 8. The sinusoidal signal guarantees that the optical head velocity is zero or very small when the head reaches the near-field regime.

Finally it is noted that the sinusoidal excitation for the approach control is an increasing periodical signal. This may be achieved by modulating an increasing signal, which for example is a ramp signal, with a sinusoidal signal. The purpose of the periodical element is to guarantee that the optical head velocity is zero or very small when the head reaches the near-field regime. Under this same rationale, various embodiments may use other periodic and increasing signals, e.g. as presented below.

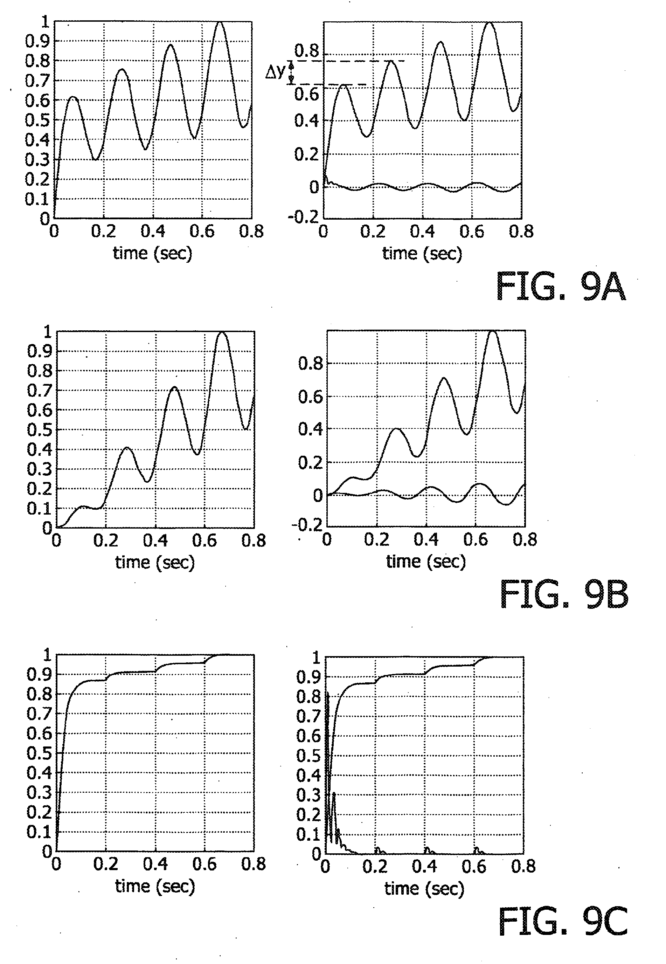

Fig.9 shows various embodiments of an increasing periodical excitation signal. Fig.9A shows a slightly increasing amplitude periodical signal superposed on a ramp. Fig 9B shows a strongly increasing amplitude sinusoidal signal superposed on a ramp. Yet another possibility is presented in Fig.9C, in which a low-pass filtered staircase signal is applied to the actuator. In each of the Figures the left graph shows a normalized control current, and the right graph shows the normalized position (upper curve) and velocity (lower curve), the velocity being substantially zero at the approach instants where the lens is near to the surface.

Note the practical consideration that, in all of the embodiments, the frequency of the excitation input signal should be chosen well below the resonance frequency of the underlying actuator to avoid the undesirable resonant oscillation during the approach control. Furthermore, the increment of the actuator position between each of the approach instants, which is for instance denoted by $\Delta y$ in Fig.9A, should be smaller than or comparable to the GES linear range.

Although the invention has been mainly explained by embodiments of the air gap servo applied to the near field optical recording system, the invention is also suitable for other record carrier and head systems that need a small air gap between any lens and record carrier surface, such as rectangular optical cards, magneto-optical discs or any other type of information storage system, or a near-field scanning microscope system. Hence the words *"near-field optical recording"* include any such system. It is noted, that in this document the word 'comprising' does not exclude the presence of other elements or steps than those listed and the word 'a' or 'an' preceding an element does not exclude the presence of a plurality of such elements, that any reference signs do not limit the scope of the claims, that the invention may be implemented by means of both hardware and software, and that several 'means' or 'units' may be represented by the same item of hardware or software. Further, the scope of the invention is not limited to the embodiments, and the invention lies in each and every novel feature as defined in the appended claims.

## Claims

1. Device for near field optical recording, information being represented by marks in a track on a record carrier (11), the device comprising

   - a head (22) including a lens to be positioned by a lens actuator at a near field distance from a surface of the record carrier for generating a scanning spot on the track, and
   - an air gap controller (32) for controlling an air gap between the lens and the surface, which air gap controller has an approach mode for bringing the lens from a remote distance to the near field distance by providing an increasing periodical excitation signal to the lens actuator for generating a sequence of approach instants at which the lens approaches the surface, the lens at the approach instants having substantially zero velocity in a direction perpendicular to the surface, and the sequence of approach instants bringing the lens subsequently closer to the surface, and
   - control means (20) for controlling a rotation of the record carrier,
   **characterized in that** the control means (20) are arranged for
   - detecting a disc displacement of the surface of record carrier in the direction of the head, and **in that** the air gap controller (32) is arranged for
   - synchronizing the periodical excitation to the rotation of the record carrier such that one of said approach instants having substantially zero velocity in a direction perpendicular to the surface corresponds to a minimum of the disc surface displacement.

2. Device as claimed in claim 1, wherein the control means (20) comprises position means (36) for detecting a rotational position of the record carrier, and a memory (37) for storing the peak rotational position which corresponds to said minimum of the disc displacement.

3. Device as claimed in claim 1, wherein the position means (36) is arranged for detecting tacho pulses generated in dependence of the rotational position.

4. Device as claimed in claim 1, wherein the air gap controller (32) comprises a synchronous sine generator (34) having an input for receiving a control signal indicative of the rotation and having an output for generating a synchronous sine wave for generating the periodical excitation.

5. Device as claimed in claim 1, wherein the increasing periodical excitation signal comprises a periodical signal of increasing amplitude.

**6.** Device as claimed in claim 1, wherein the increasing periodical excitation signal comprises a ramp component.

**7.** Device as claimed in claim 1, wherein the increasing periodical excitation signal comprises a low-pass filtered staircase component.

**8.** Device as claimed in claim 1, wherein the air gap controller (32) is arranged for, in the approach mode,

- detecting when the lens is within the near field distance (355) at one of the approach instants, and
- switching to a closed loop mode when the lens is within the near field distance.

**9.** Device as claimed in claim 1, wherein the control means (20) are arranged for said detecting a disc displacement of the surface of record carrier in the direction of the head by a processing servo signal from a focus servo system (38) for focusing a beam a radiation on a layer of the record carrier, in a particular case the focus servo system (38) being arranged for focusing a beam of radiation of a wavelength different from the wavelength of the scanning spot.

**10.** Pull-in method for bringing a lens from a remote distance to a near field distance from a surface of a record carrier for use in near field optical recording, the method comprising

- providing an increasing periodical excitation to a lens actuator for generating a sequence of approach instants at which the lens approaches the surface, the lens at the approach instants having substantially zero velocity in a direction perpendicular to the surface, and the sequence of approach instants bringing the lens subsequently closer to the surface, and
- controlling a rotation of the record carrier,
**characterized in that** the method comprises
- detecting a disc displacement of the surface of record carrier in the direction of the head, and
- synchronizing the periodical excitation to the rotation of the record carrier such that one of said approach instants having substantially zero velocity in a direction perpendicular to the surface corresponds to a minimum of the disc surface displacement.

**Patentansprüche**

**1.** Anordnung zur optischen Nahfeldaufzeichnung, wobei Information durch Markierungen in einer Spur auf einem Aufzeichnungsträger (11) dargestellt wird,
wobei die Anordnung Folgendes umfasst:

- einen Kopf (22) mit einer Linse, die von einem Linsenstellglied in einem Nahfeldabstand von einer Oberfläche des Aufzeichnungsträgers positioniert werden soll, und zwar zum Erzeugen eines Abtastpunktes in der Spur, und
- einen Luftspaltregler (32) zur Steuerung eines Luftspaltes zwischen der Linse und der Oberfläche, wobei der genannte Luftspaltregler eine Annäherungsmode zum Heranführen der Linse aus einem fernen Abstand in den Nahfeldabstand durch Erzeugung eines zunehmenden Anregungssignals zu dem Linsenstellglied zur Erzeugung einer Folge von Annäherungszeitpunkten, zu denen die Linse der Oberfläche nähert, wobei die Linse zu den Annäherungszeitpunkten im Wesentlichen eine Null-Geschwindigkeit in einer Richtung, senkrecht zu der Oberfläche aufweist, und die Folge von Annäherungszeitpunkten die Linse daraufhin näher en die Oberfläche heranführt, und
- Steuermittel (20) zur
Steuerung einer Drehung des Aufzeichnungsträgers,
**dadurch gekennzeichnet, dass** die Steuermittel (20) zum Detektieren einer Diskverlagerung der Oberfläche des Aufzeichnungsträgers in der Richtung des Kopfes vorgesehen sind, und dass
der Luftspaltregler (32) zum Synchronisieren der periodischen Anregung zur Drehung des Aufzeichnungsträgers vorgesehen ist so dass einer der Annäherungszeitpunkte, der im Wesentlichen eine Nullgeschwindigkeit in einer Richtung senkrecht zu der Oberfläche hat, einer minimalen Diskflächenverlagerung entspricht.

**2.** Anordnung nach Anspruch 1, wobei die Steuermittel (20) Positionsmittel (36) zum Detektieren einer Rotationsposition des Aufzeichnungsträgers aufweisen, und einen Speicher (37) zum Speichern der Spitzenrotationsposition, die dem genannten Minimalwert der Diskverlagerung entspricht.

**3.** Anordnung nach Anspruch 1, wobei die Positionsmittel (36) zum Detektieren von Tachoimpulsen vorgesehen sind, die in Abhängigkeit von der Rotationsposition erzeugt worden sind.

4. Anordnung nach Anspruch 1, wobei der Luftspaltregler (32) einen synchronen Sinusgenerator (34) mit einem Eingang zum Empfangen eines Steuersignals aufweist, das eine Anzeige der Drehung ist, und mit einem Ausgang zum Erzeugen einer synchronen Sinuswelle zum Erzeugen der periodischen Anregung.

5. Anordnung nach Anspruch 1, wobei das zunehmende periodische Anregungssignal ein periodisches Signal einer ansteigenden Amplitude aufweist.

6. Anordnung nach Anspruch 1, wobei das zunehmende periodische Anregungssignal einen Anstiegsanteil aufweist.

7. Anordnung nach Anspruch 1, wobei das ansteigende periodische Anregungssignal einen tiefpassgefilterten Stufenanteil aufweist.

8. Anordnung nach Anspruch 1, wobei der Luftspaltregler (32) vorgesehen ist, in der Annäherungsmode:

   - zum Detektieren, wenn die Linse sich zu einem der Annäherungszeitpunkte innerhalb des Nahfeldabstandes (355) befindet, und
   - zum Umschalten in eine geschlossene-Schleifenmode, wenn die Linse sich innerhalb des Nahfeldabstandes befindet.

9. Anordnung nach Anspruch 1, wobei die Steuermittel (20) dazu vorgesehen sind, eine Diskverlagerung der Oberfläche des Aufzeichnungsträgers in der Richtung des Kopfes zu detektieren, und zwar, durch ein Verarbeitungs-Servosignal von einem FokusServosystem (38) zum Fokussieren eines Strahlungsbündels auf eine Schicht des Aufzeichnungsträgers, wobei in einem Spezialfall das Fokus-Servosystem (38) zum Fokussieren eines Strahlungsbündels einer Wellenlänge vorgesehen ist, die anders ist als die Wellenlänge des Abtastpunktes.

10. Einziehverfahren zum Heranführen einer Linse aus einem Fernabstand in einen Nahfeldabstand von einer Oberfläche eines Aufzeichnungsträgers zur Verwendung bei der optischen Nahfeldaufzeichnung, wobei das Verfahren die nachfolgenden Verfahrensschritte umfasst:

    - das Schaffen einer zunehmenden periodischen Anregung zu einem Linsenstellglied zum Erzeugen einer Folge von Annäherungszeitpunkten, zu denen die Linse der Oberfläche nähert, wobei die Linse zu den Annäherungszeitpunkten eine nahezu Null-Geschwindigkeit in einer Richtung nahezu senkrecht zu der Oberfläche hat, und die Folge der Annäherungszeitpunkte die Linse daraufhin näher an die Oberfläche bringt, und
    - das Steuern einer Drehung des Aufzeichnungsträgers,
    **dadurch gekennzeichnet, dass** das Verfahren die nachfolgenden Verfahrensschritte umfasst:
    - das Detektieren einer Diskverlagerung der Oberfläche des Aufzeichnungsträgers in der Richtung des Kopfes, und
    - das Synchronisieren der periodischen Anregung zu der Drehung des Aufzeichnungsträgers, so dass einer der genannten Annäherungszeitpunkte, der eine im Wesentlichen Null-Geschwindigkeit in einer Richtung senkrecht zu der Oberfläche hat, einem Minimalwert der Diskflächenverlagerung entspricht.

**Revendications**

1. Dispositif pour l'enregistrement optique en champ proche, de l'information étant représentée par des marques dans une piste sur un support d'enregistrement (11),
   le dispositif comprenant :

   - une tête (22) comprenant une lentille à positionner par un actionneur de lentille à une distance en champ proche d'une surface du support d'enregistrement pour générer un spot de balayage sur la piste, et
   - un contrôleur d'entrefer (32) pour commander un entrefer entre la lentille et la surface, lequel contrôleur d'entrefer présente un mode d'approche pour amener la lentille à partir d'une distance lointaine à la distance en champ proche en fournissant un signal d'excitation périodique croissante à l'actionneur de lentille afin de générer une séquence d'instants d'approche auxquels la lentille s'approche de la surface, la lentille aux instants d'approche ayant une vitesse sensiblement nulle dans une direction qui est perpendiculaire à la surface et la séquence d'instants d'approche amenant ensuite la lentille plus proche de la surface, et

- des moyens de commande (20) pour commander une rotation du support d'enregistrement,
**caractérisé en ce que** les moyens de commande (20) sont agencés de manière à :
- détecter un déplacement du disque de la surface du support d'enregistrement dans la direction de la tête, et
**en ce que** le contrôleur d'entrefer (32) est agencé de manière à :
- synchroniser l'excitation périodique avec la rotation du support d'enregistrement de telle façon qu'un desdits instants d'approche ayant une vitesse sensiblement nulle dans une direction qui est perpendiculaire à la surface corresponde à un minimum du déplacement de la surface du disque.

2. Dispositif selon la revendication 1, dans lequel les moyens de commande (20) comprennent des moyens de position (36) pour détecter une position de rotation du support d'enregistrement et une mémoire (37) pour stocker la position de rotation de pointe qui correspond audit minimum du déplacement du disque.

3. Dispositif selon la revendication 1, dans lequel les moyens de position (36) sont agencés de manière à détecter des impulsions tachymétriques qui sont générées en fonction de la position de rotation.

4. Dispositif selon la revendication 1, dans lequel le contrôleur d'entrefer (32) comprend un générateur sinusoïdal synchrone (34) ayant une entrée pour recevoir un signal de commande qui est indicatif de la rotation et ayant une sortie pour générer une onde sinusoïdale synchrone pour générer l'excitation périodique.

5. Dispositif selon la revendication 1, dans lequel le signal d'excitation périodique croissante comprend un signal périodique d'amplitude croissante.

6. Dispositif selon la revendication 1, dans lequel le signal d'excitation périodique croissante comprend une composante de rampe.

7. Dispositif selon la revendication 1, dans lequel le signal d'excitation périodique croissante comprend une composante d'escalier filtrée passe-bas.

8. Dispositif selon la revendication 1, dans lequel le contrôleur d'entrefer (32) est agencé, dans le mode d'approche, de manière à :

    - détecter lorsque la lentille se situe dans la distance en champ proche (355) à un des instants d'approche, et
    - commuter à un mode en boucle fermée lorsque la lentille se situe dans la distance en champ proche.

9. Dispositif selon la revendication 1, dans lequel les moyens de commande (20) sont agencés pour ladite détection d'un déplacement du disque de la surface du support d'enregistrement dans la direction de la tête par un signal asservi de traitement à partir d'un système asservi de focalisation (38) pour focaliser un faisceau de rayonnement sur une couche du support d'enregistrement, dans un cas particulier le système asservi de focalisation (38) étant agencé de manière à focaliser un faisceau de rayonnement d'une longueur d'onde qui est différente de la longueur d'onde du spot de balayage.

10. Procédé de traction pour amener une lentille à partir d'une distance lointaine à une distance en champ proche d'une surface d'un support d'enregistrement pour son utilisation dans un enregistrement optique en champ proche, le procédé comprenant les étapes suivantes consistant à :

    - fournir une excitation périodique croissante à un actionneur de lentille afin de générer une séquence d'instants d'approche auxquels la lentille s'approche de la surface, la lentille aux instants d'approche ayant une vitesse sensiblement nulle dans une direction qui est perpendiculaire à la surface et la séquence d'instants d'approche amenant ensuite la lentille plus proche de la surface, et
    - commander une rotation du support d'enregistrement,
    **caractérisé en ce que** le procédé comprend les étapes suivantes consistant à :
    - détecter un déplacement du disque de la surface du support d'enregistrement dans la direction de la tête, et
    - synchroniser l'excitation périodique avec la rotation du support d'enregistrement de telle façon qu'un desdits instants d'approche ayant une vitesse sensiblement nulle dans une direction qui est perpendiculaire à la surface corresponde à un minimum du déplacement de la surface du disque.

# FIG. 1

# FIG. 2

# FIG. 3

FIG. 4

EP 1 961 003 B1

FIG. 5

FIG. 6

FIG. 7

FIG. 8

FIG. 9A

FIG. 9B

FIG. 9C

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2005101391 A

- WO 20051013 A

**Non-patent literature cited in the description**

- **T. Ishimoto ; K. Saito ; T. Kondo ; A. Nakaoki ; M. Yamamoto.** Gap Servo System for a Biaxial Device Using an Optical Gap Signal in a Near Field Readout System. *ISOM/ODS,* 2002

- **K. Saito.** Readout Method for Read Only Memory Signal and Air Gap Control Signal in a Near Field Optical Disc System. *Jpn. J. Appl. Phys.,* 2002, vol. 41, 1898-1902